# EUROPEAN PATENT SPECIFICATION

(11) **EP 2 048 066 B1**
(45) Date of publication and mention of the grant of the patent: **15.12.2010**
(21) Application number: 08017827.0
(22) Date of filing: 10.10.2008
(51) Int. Cl.: B62H 1/02, B62K 11/00

(54) **Motorcycle**
Motorrad
Motocyclette

(30) Priority: 10.10.2007 JP 2007264953
(43) Date of publication of application: 15.04.2009
(73) Proprietor: Yamaha Hatsudoki Kabushiki Kaisha, Shizuoka-ken Shizuoka 438-8501 (JP)
(72) Inventor: Ito, Norimasa, Iwata-shi Shizuoka-ken 438-8501 (JP)
(74) Representative: Grünecker, Kinkeldey, Stockmair & Schwanhäusser Anwaltssozietät

(56) References cited:
- JP-A- 4 339 083
- JP-A- 57 047 262
- JP-A- 59 049 314
- JP-A- 61 143 220
- JP-A- 61 160 378
- JP-A- 2002 037 174
- JP-A- 2005 163 669
- JP-A- 2006 315 657
- KR-A- 20020 072 099

## Description

The present invention relates to a motorcycle according to the preamble of independent claim 1. Such a motorcycle can be taken from prior art document JP 2002-037174 A. In particular, said prior art document teaches a motorcycle with an engine having an exhaust gas passage means which extends in rearward direction from said engine. In horizontal plan of said exhaust system, a side end is arranged, wherein the stand body of said side stand is attached to a support bracket by means of a stand bracket, such that the stand body is able to turn around the stand bracket. Said support bracket is attached to the frame and extends in width direction of the vehicle substantially further outward than the respective exhaust passage means.

Generally, motorcycles comprise a side stand that uprises a vehicle body in a state of being inclined on one side in a vehicle width direction. Conventionally, in Japanese Patent No. 3187075 a motorcycle is provided with a side stand of this kind, an exhaust pipe connected to an engine is arranged along a bottom surface of the engine, a downtube is arranged along left and right side walls of the engine, and a stand body is mounted to the downtube through a bracket to be able to swing.

By the way, it is conceivable to arrange an exhaust pipe along a side wall of an engine in order to make flow of exhaust gases favorable, or to meet a demand in terms of design. With such motorcycle, a space, in which a side stand is mounted to the downtube, is ensured and an exhaust pipe is arranged outside the space, so that in order to ensure a necessary bank angle, it becomes necessary to set a configuration position of the exhaust pipe to a relatively high position. Consequently, freedom in a configuration position of the exhaust pipe is restricted. The invention has been thought of in view of the conventional situation.

It is an objective of the present invention to provide a motorcycle as indicated above, in which it is possible to ensure freedom in a configuration position of an exhaust pipe through an improvement of a configuration position of a side stand.

According to the present invention, said objective is solved by a motorcycle having the features of independent claim 1. Preferred embodiments are laid down in the dependent claims.

Accordingly, it is provided a motorcycle comprising: a body frame, an engine mounted to the body frame, said engine having a side wall portion, an exhaust device connected to the engine, said exhaust device including an exhaust pipe, and a side stand configured to uprise the motorcycle in a state when being inclined in motorcycle width direction, wherein the side stand is mounted to the side wall portion of the engine between the exhaust pipe and the side wall portion.

Accordingly, the side stand is mounted to the side wall portion to be positioned between the exhaust pipe and the side wall portion of the engine, so that it is possible to arrange the exhaust pipe toward a center of a vehicle as compared with the case where a side stand is mounted to a downtube arranged laterally of a side wall portion of an engine and an exhaust pipe is arranged outside the side stand. Consequently, a bank angle is easy to ensure, so that it is possible to achieve an improvement in freedom in a configuration position in a height direction of an exhaust pipe.

Preferably, the exhaust device is disposed laterally of the side wall portion of the engine and extends in moving direction of the motorcycle rearwardly.

Still further, preferably the stand bracket includes a mount flange portion mounted to the side wall portion of the engine, a support portion supporting the stand body, the stand body being turnably supported by a rotating shaft fixed to the support portion.

Yet further still, preferably the rotating shaft projects from the support portion on an opposite side with regard to the exhaust pipe, and/or the stand body is arranged to abut against a support surface of the support portion formed on an opposite side with regard to the exhaust pipe.

Preferably, the stand body includes a connection connected to the stand bracket, and, preferably, the rotating shaft includes a journal portion that journals the connection.

Further, preferably the rotating shaft includes a load receiving portion that abuts against the support surface.

Still further, preferably the load receiving portion has a larger diameter than a diameter of the journal portion.

Yet further still, preferably when the stand body is in its storage position, the stand body and the exhaust pipe intersect each other as viewed in plan view.

Preferably, the exhaust device includes a recess disposed intermediately of an exhaust path to be dented inward in a motorcycle width direction.

Further, preferably when the stand body is in its storage position, a tip end of the stand body overlaps the recess as viewed laterally.

Still further, preferably when the stand body is in its storage position, a tip end of the stand body is positioned in the recess as viewed in plan view.

According to a preferred embodiment, the exhaust device further includes a displacement chamber, to which the exhaust pipe is connected, and, preferably, the recess is formed at a connection of the displacement chamber and the exhaust pipe.

Preferably, a muffler is connected to the displacement chamber, and, preferably, the recess is formed at a connection of the displacement chamber to the exhaust pipe and the muffler.

In the following, the present invention is explained in greater detail by means of embodiments thereof in conjunction with the accompanying drawings, wherein:
- Fig. 1: is a left side view showing a motorcycle according to an embodiment;
- Fig. 2: is a left side view showing an exhaust device and a side stand part of the motorcycle;
- Fig. 3: is a plan view showing the exhaust device and the side stand part;
- Fig. 4: is a view showing the side stand part as viewed from the rear of a vehicle;
- Fig. 5: is a view showing the side stand as viewed from laterally of a vehicle;
- Fig. 6: is a cross sectional view (cross sectional view taken along the line VI-VI in Fig. 5) showing the side stand;
- Fig. 7: is a view showing a mount flange portion of the side stand as viewed from laterally of a vehicle; and
- Fig. 8: is a cross sectional view (cross sectional view taken along the line VIII-VIII in Fig. 7) showing the mount flange portion.

Among others, the following reference signs are used in the figures:
1: motorcycle
2: body frame
8: engine
8c': side wall portion
13: exhaust device
13a: exhaust pipe
13c: exhaust chamber (displacement chamber)
13e: muffler
21: side stand
26: stand body
26a: connection
26e: foot put portion
26f: tip end
27: stand bracket
27a: mount flange portion
27b: support portion
27c: support surface
28: rotating shaft
28a: journal portion
28b: load receiving portion
A: recess
B: road surface
C: service position
D: storage position

An embodiment will be described below with reference to the accompanying drawings.

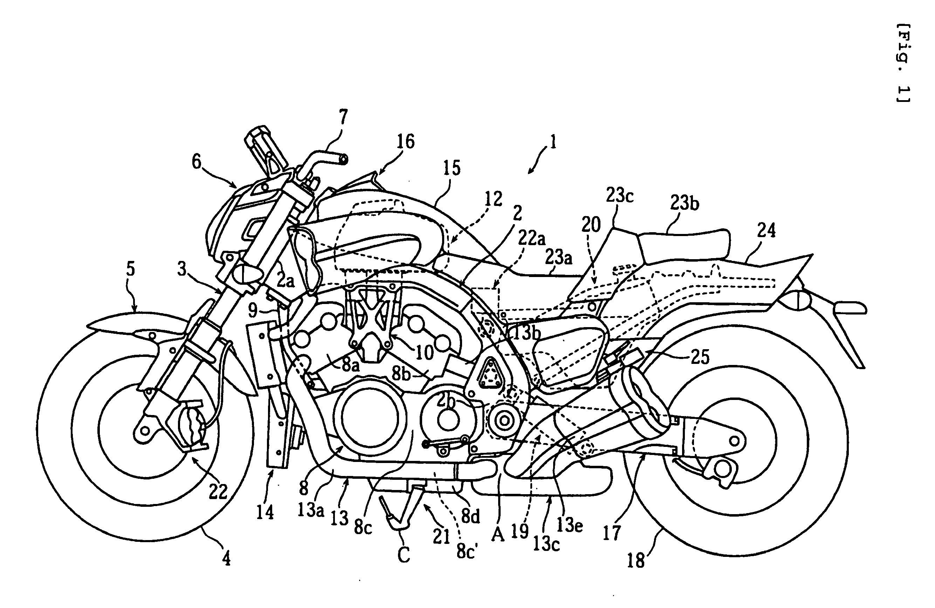

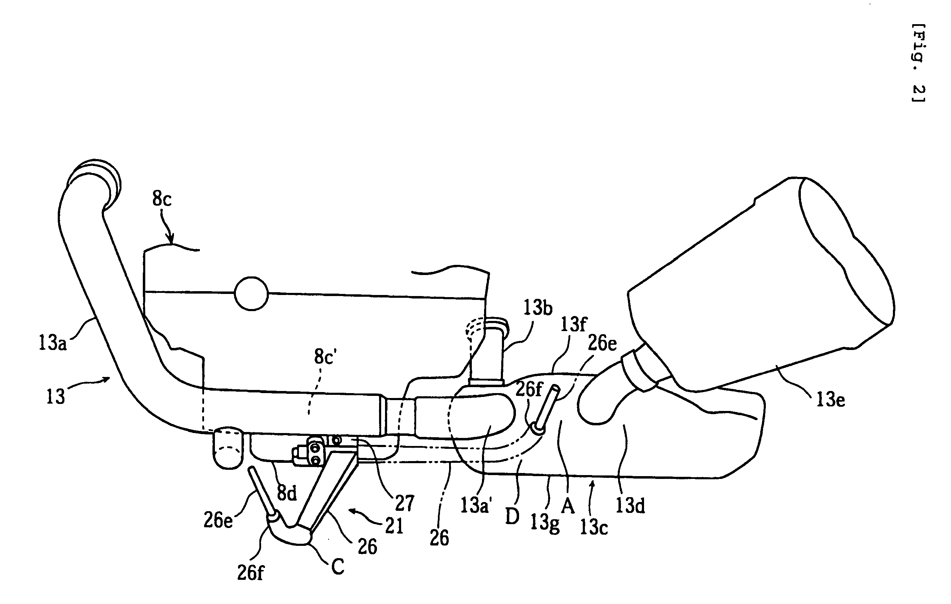

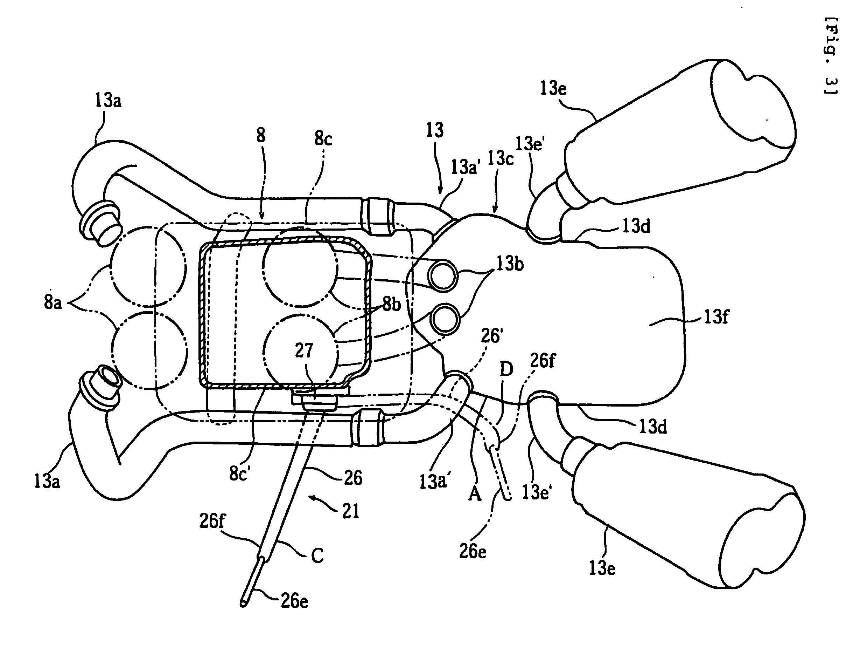

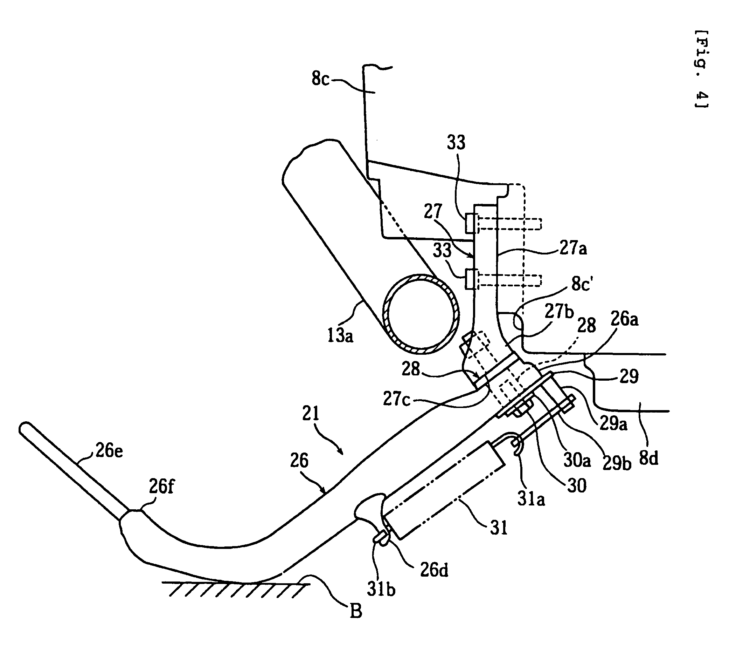

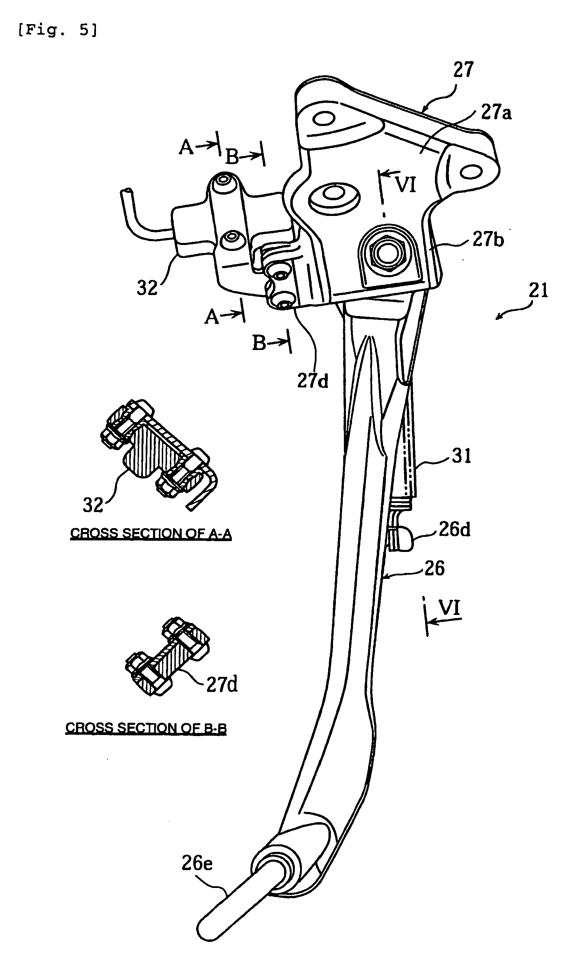

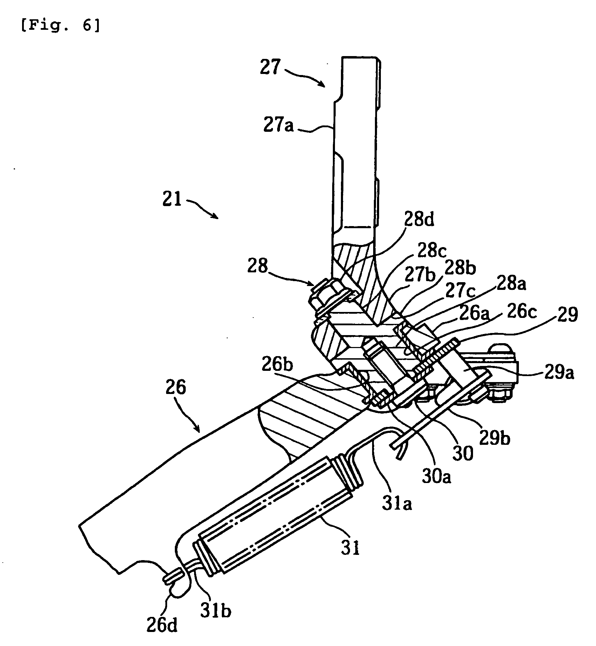

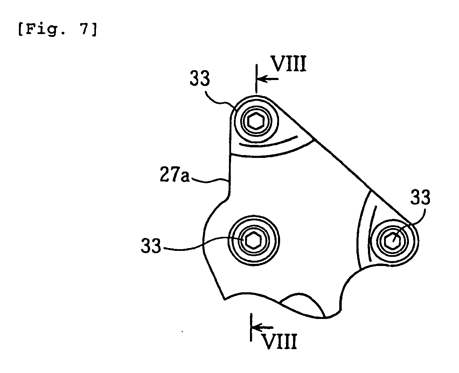

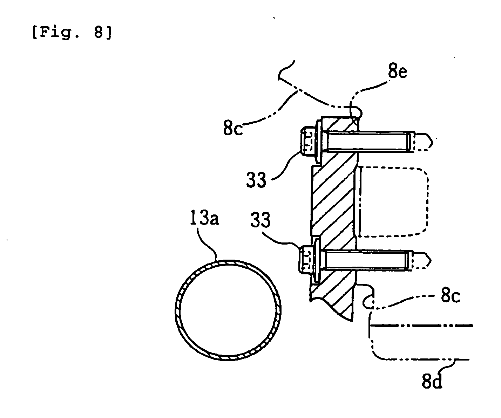

Figs. 1 to 8 are views illustrating a motorcycle according to an embodiment. In addition, front and rear, and left and right referred to in descriptions of the embodiment mean front and rear, and left and right as seen in a state of being seated on a seat unless otherwise specified.

In the drawings, the reference numeral 1 denotes a motorcycle, the motorcycle 1 having the following outline construction. A head pipe 2a at a front end of a body frame 2 supports a front fork 3 to make the same steerable left and right. A front wheel 4 is journaled at a lower end of the front fork 3, and the front wheel 4 is covered by a front fender 5, the front fender 5 being mounted to a lower portion of the front fork 3. Also, the front fork 3 has a headlight device 6 arranged on an upper portion thereof and has a steering handle 7 fixed at an upper end thereof.

Also, the body frame 2 has an engine unit 8 suspended by a front suspension bracket 9, a central suspension bracket 10, and a rear arm bracket portion 2b of the body frame 2. An intake device 12 and an exhaust device 13 are connected to the engine unit 8 and a radiator device 14 is arranged forwardly of the engine unit. A frame cover 15 covers the intake device 12 from above and an indicator device 16 representative of a vehicular state is arranged on the frame cover 15.

Also, a side stand 21 is arranged on a left wall lower portion of the engine unit 8 to have the motorcycle 1 uprising in a state of being a little inclined leftward.

Furthermore, the rear arm bracket portion 2b of the body frame 2 supports a rear arm 17 to enable the same to swing vertically and a rear wheel 18 is supported at a rear end of the rear arm 17. The rear wheel 18 and the front wheel 4 are braked by a hydraulic brake device 22.

A rear wheel suspension 19 is arranged between the rear arm 17 and the rear arm bracket portion 2b, the rear wheel suspension 19 comprising a remote type operating characteristics adjustment mechanism 25.

A fuel tank 20 is arranged above the rear wheel suspension 19. A hydraulic control unit 22a of the brake device 22 is arranged forwardly of and obliquely upwardly of the fuel tank 20. A main seat 23a is arranged to cover upper portions of the hydraulic control unit 22a and the fuel tank 20, and a tandem seat 23b is arranged contiguous to the main seat 23a. In addition, the reference numeral 23c denotes a backrest that supports a rider's waist. Further, a rear fender 24 that covers the rear wheel 18 from above is arranged below the tandem seat 23b.

The engine unit 8 is of a water-cooled four-stroke V-type four-cylinder engine arranging left and right, front cylinders 8a and left and right, rear cylinders 8b on a crank case 8c to define a V bank in a longitudinal direction. An oil pan 8d is connected to a bottom surface of the crank case 8c.

The exhaust device 13 includes a front exhaust pipe 13a connected to the front cylinder 8a of the engine unit 8, a rear exhaust pipe 13b connected to the rear cylinder 8b, an exhaust chamber (displacement chamber) 13bc, to which the respective exhaust pipes 13a, 13b are connected and which is common to all the cylinders, and left and right mufflers 13e, 13e connected to a side wall 13d of the exhaust chamber 13c to extend rearward and obliquely upward on both the left and right of the vehicle.

Here, the exhaust chamber 13c is in the form of a flat box including an upper wall 13f and a lower wall 13g, which are formed substantially flat, and a side wall 13d arranged to surround peripheries of the both walls, the exhaust chamber being arranged below a front portion of the rear arm 17 and between the rear wheel 18 and a bottom of the engine unit 8.

Here, the rear exhaust pipe 13b extends rearward from the rear cylinder 8b and bends downward to be connected to a front portion of the upper wall 13f of the exhaust chamber 13c. On the other hand, the front exhaust pipe 13a extends rearward and obliquely downward while diverging a little outward from the front cylinder 8a and bends rearward to extend rearward along a side wall portion 8c' of the crank case 8c. A rear end 13a' of the front exhaust pipe 13a is connected to a front portion of the side wall 13d of the exhaust chamber 13c while bending arcuately inward in a vehicle width direction.

Furthermore, the left and right mufflers 13e, 13e are connected to the side wall 13d of the exhaust chamber 13c and its connection 13e' projects in the vehicle width direction. Consequently, a recess A dented inward in the vehicle width direction is formed at a connection of the exhaust chamber 13c to the left, front exhaust pipe 13a and the left muffler 13e.

The side stand 21 mainly includes a stand body 26 grounded on the road surface B and a stand bracket 27 that supports the stand body 26 to enable the same to turn between a service position C and a storage position D.

The stand bracket 27 is mounted to the side wall portion 8c' of the crank case 8c. More specifically, the stand bracket 27 comprises a mount flange portion 27a mounted to the side wall portion 8c', a support portion 27b formed integral with the mount flange portion 27a to support the stand body 26, and a rotating shaft 28 fixed to the support portion 27b to project obliquely downward on an opposite side to the exhaust pipe 13a.

The mount flange portion 27a is in the form of a substantially triangular-shaped thick plate fixed to a mount bearing surface 8e, which is formed flat on the side wall portion 8c', by three bolts 33 inserted into corners of the triangle. The support portion 27b is in the form of a thick plate bent a little inward in the vehicle width direction and obliquely downward from a lower edge of the mount flange portion 27a and having a flat support surface 27c at a tip end thereof.

The rotating shaft 28 is fixed to the support portion 27b to extend inward in the vehicle width direction and obliquely downward as a whole. The rotating shaft 28 includes a journal portion 28a that journals a connection 26a of the stand body 26, a load receiving portion 28b having a larger diameter than that of the journal portion 28a, and a bolt portion 28c projecting outward in the vehicle width direction and obliquely upward from the load receiving portion 28b, and is clamped and fixed to the support portion 27b by a nut 28d.

The stand body 26 is rod-shaped and formed at a base end thereof with the connection 26a. The connection 26a is formed with an axial hole 26b and a bearing metal 26c is fitted onto an inner surface thereof. The axial hole 26b is fitted rotatably onto the journal portion 28a of the rotating shaft 28. Also, a foot put portion 26e, on which a user puts the foot when turning the stand body 26, is formed at a tip end 26f of the stand body 26. The foot put portion 26e is formed to come up a little from the road surface B when the stand body 26 is in the service position C, thus making it easy for a user to put the foot thereon.

A stationary plate 29 is fitted onto a tip end of the journal portion 28a in a manner not to enable relative turning and fixed through a washer 30a by a bolt 30 whereby the stand body 26 is held on the journal portion 28a to be able to turn.

Also, a latch pin 29a is fixed to the stationary plate 29 and one end 31 a of a coil spring 31 is latched on the latch pin 29a through a link plate 29b. The other end 31 b of the coil spring 31 is latched on a projection 26d formed midway the stand body 26. The coil spring 31 provides for bias toward the service position C when the stand body 26 is turned to the service position C and provides for bias toward the storage position D when turned to the storage position D.

Also, a switch boss portion 27d is formed integral with the support portion 27b and a stand switch 32 is mounted to the switch boss portion 27d. In order to prevent starting in a state, in which the stand body 26 is in the service position C, the stand switch 32 is constructed to detect a position of the stand body 26.

Here, when the stand body 26 is in the storage position D, a part 26' of the stand body 26 intersects the rear end 13a' of the front exhaust pipe 13a as viewed in plan view of a vehicle and the tip end 26f of the stand body 26 and a part of the foot put portion 26e are positioned in the recess A. Also, as viewed from laterally of a vehicle, the tip end 26f of the stand body 26 and the foot put portion 26e overlap the recess A.

As described above, according to the embodiment, the side stand 21 is mounted to the side wall portion 8c' so as to be positioned between the exhaust pipe 13a and the side wall portion 8c' of the engine, so that a bank angle is easy to ensure and it is accordingly possible to improve freedom in a configuration position in a height direction of the exhaust pipe.

That is, in the case where a side stand is mounted to a downtube arranged laterally of an engine side wall portion and an exhaust pipe is arranged outwardly thereof, the exhaust pipe is outward away from a vehicle center line in a vehicle width direction, so that the exhaust pipe is made easy to ground when a vehicle is caused to bank. Therefore, in order to ensure a large bank angle, an exhaust pipe cannot but be made high in a configuration position. According to the embodiment, the side stand 21 is mounted directly to the side wall portion 8c' and no downtube is present, so that it is possible to arrange the front exhaust pipe 13a toward a vehicle center line and so the front exhaust pipe is hard to ground at the time of banking. Therefore, it is also possible to arrange the front exhaust pipe 13a in a low location and so freedom in a configuration position is high correspondingly.

Also, since the side stand 21 is constructed to comprise the stand body 26 and the stand bracket 27 that supports the stand body to enable the same to turn, and the stand bracket 27 is mounted to the side wall portion 8c', it is possible in a simple construction to arrange the side stand 21 between the front exhaust pipe 13a and the side wall portion 8c'.

Furthermore, the stand bracket 27 is constructed to comprise the support portion 27b including the support surface 27c positioned on an opposite side to the exhaust pipe 13a and the stand body 26 is arranged to abut against the support surface 27c, so that it is possible to arrange the stand body 26 in a low location. Correspondingly, it is possible to arrange the exhaust pipe 13a in a low location, thus enabling further enlarging the exhaust pipe 13a in freedom with respect to a configuration position.

Also, since the rotating shaft 28 having the journal portion 28a of large diameter is fixed to the support portion 27b, the journal portion 28a journals the connection 26a of the stand body 26, and the load receiving portion 28b having a larger diameter than that of the journal portion 28a is caused to abut against the support surface 27c, it is possible to withstand a large load generating on the journal portion in the case where the stand body 26 abuts against a lower surface of the support portion 27b.

Also, since when the stand body 26 is in the storage position D, the stand body 26 and the exhaust pipe 13a intersect each other as viewed in plan view, the foot put portion 26e can be made to project outward although the side stand 21 is arranged between the exhaust pipe 13a and the side wall portion 8c'. Besides, when the stand body 26 is in the storage position D, the tip end 26f of the stand body 26 and the part of the foot put portion 26e are positioned in the recess A as viewed in plan view, so that degradation in outward appearance, which the foot put portion 26e projects outward more than needed to cause, is not brought about and so it is possible to readily perform an operation when the stand body 26 is turned to the service position C from the storage position D.

Furthermore, when the stand body 26 is in the storage position D, the tip end 26f of the stand body 26 and the foot put portion 26e overlap the recess A as viewed from laterally of a vehicle, so that the foot put portion 26e or the like becomes hard to stand out in a stored state in this respect and so it is possible to achieve an improvement in outward appearance.

In addition, while the embodiment has been described with respect to the case where the side stand 21 is arranged on the left of a vehicle, some side stands are provided on the right according to countries and the technical teaching above is also applicable in such case.

The description above discloses (among others) an embodiment of a motorcycle comprising a body frame, an engine mounted to the body frame, an exhaust device connected to the engine, and a side stand that uprises the vehicle in a state of being inclined in a vehicle width direction, and wherein the exhaust device includes an exhaust pipe disposed laterally of a side wall portion of the engine to extend rearwardly of the vehicle, and the side stand is mounted to the side wall portion to be positioned between the exhaust pipe and the side wall portion of the engine.

Preferably the stand bracket includes a mount flange portion mounted to the side wall portion of the engine, a support portion that supports the stand body, and a rotating shaft fixed to the support portion to project on an opposite side to the exhaust pipe, and the stand body is arranged to abut against a support surface of the support portion formed on an opposite side to the exhaust pipe, and supported by the rotating shaft to be able to turn.

Further, preferably the stand body includes a connection connected to the stand bracket, and the rotating shaft includes a journal portion that journals the connection, and a load receiving portion that abuts against the support surface.

Further, preferably the load receiving portion is formed to have a larger diameter than that of the journal portion.

Further, preferably when the stand body is in the storage position, the stand body and the exhaust pipe intersect each other as viewed in plan view.

Further, preferably the exhaust device includes a recess disposed intermediately of an exhaust path to be dented inward in a vehicle width direction, and when the stand body is in the storage position, a tip end of the stand body overlaps the recess as viewed from laterally.

Further, preferably the exhaust device includes a recess disposed intermediately of an exhaust path to be dented inward in a vehicle width direction, and when the stand body is in the storage position, a tip end of the stand body is positioned in the recess as viewed in plan view.

Further, preferably the exhaust device further includes a displacement chamber, to which the exhaust pipe is connected, and the recess is formed at a connection of the displacement chamber and the exhaust pipe.

Further, preferably a muffler is connected to the displacement chamber, and the recess is formed at a connection of the displacement chamber to the exhaust pipe and the muffler.

In order to provide a motorcycle, in which a side stand is improved in a configuration position to enable ensuring the freedom of an exhaust pipe in a configuration position, an embodiment of a motorcycle 1 comprises a body frame 2, an engine 8 mounted to the body frame 2, an exhaust device 13 connected to the engine, and a side stand 21 that uprises the vehicle in a state of being inclined in a vehicle width direction, and wherein the exhaust device 13 includes an exhaust pipe 13a disposed laterally of a side wall portion 8c' of the engine to extend rearwardly of the vehicle, and the side stand 21 is mounted to the side wall portion 8c' to be positioned between the exhaust pipe 13a and the side wall portion 8c' of the engine.

## Claims

1. Motorcycle comprising:
a body frame (2),
an engine (8) mounted to the body frame (2), said engine (8) having a side wall portion (8c'),
an exhaust device (13) connected to the engine (8), said exhaust device (13) including an exhaust pipe (13a), and
a side stand (21) configured to uprise the motorcycle in a state when being inclined in motorcycle width direction, said side stand (21) includes a stand body (26) configured to ground a road surface and a stand bracket (27) supporting the stand body (26) to enable the same to turn between a service position (C) and a storage position (D), **characterized in that**
said stand bracket (27) is mounted to the side wall portion (8c') of the engine (8) and between the exhaust pipe (13a) and the side wall portion (8c') in motorcycle width direction.

2. Motorcycle according to claim 1, **characterized in that** the stand bracket (27) includes a mount flange portion (27a) mounted to the side wall portion (8c') of the engine (8), a support portion (27b) supporting the stand body (26), the stand body (26) being turnably supported by a rotating shaft (28) fixed to the support portion (27b).

3. Motorcycle according to claim 2, **characterized in that** the rotating shaft (28) projects from the support portion (27b) on an opposite side with regard to the exhaust pipe (13a), and/or the stand body (26) is arranged to abut against a support surface (27c) of the support portion (27b) formed on an opposite side with regard to the exhaust pipe (13a).

4. Motorcycle according to one of claims 1 to 3, **characterized in that** the stand body (26) includes a connection (26a) connected to the stand bracket (27), and, preferably, the rotating shaft (28) includes a journal portion (28a) that journals the connection (26a).

5. Motorcycle according to claim 3 or 4, **characterized in that** the rotating shaft (28) includes a load receiving portion (28b) that abuts against the support surface (27c).

6. Motorcycle according to claim 5, **characterized in that** the load receiving portion (28b) has a larger diameter than a diameter of the journal portion (28a).

7. Motorcycle according to one of claims 1 to 6, **characterized in that** when the stand body (26) is in its storage position (D), the stand body (26) and the exhaust pipe (13a) intersect each other as viewed in plan view.

8. Motorcycle according to one of the claims 1 to 7, **characterized in that** the exhaust pipe (13a) is disposed laterally of the side wall portion (8c') of the engine (8) and extends in moving direction of the motorcycle rearwardly.

9. Motorcycle according to one of the claims 1 to 8, **characterized in that** the exhaust device (13) further includes a displacement chamber (13c) wit a side wall (13d), to which the exhaust pipe (13a) is connected, and a muffler (13e) connected to the displacement chamber (13c), wherein a recess (A) is formed at a connection of the displacement chamber (13c) to the exhaust pipe (13a) and the muffler (13e), said recess (A) extends intermediately dented inward in a motorcycle width.

10. Motorcycle according to claim 9, **characterized in that** when the stand body (26) is in its storage position (D), a tip end (26f) of the stand body (26) overlaps the recess (A) as viewed laterally.

11. Motorcycle according to claim 9 or 10, **characterized in that** when the stand body (26) is in its storage position (D), a tip end (26f) of the stand body (26) is positioned in the recess (A) as viewed in plan view.

## Patentansprüche

1. Motorrad, aufweisend:
einen Karosserierahmen (2),
eine Brennkraftmaschine (8), montiert an dem Karosserierahmen (2), wobei die Brennkraftmaschine (8) einen Seitenwandabschnitt (8c') hat,
eine Abgasvorrichtung (13), verbunden mit der Brennkraftmaschine (8), wobei die Abgasvorrichtung (13) ein Abgasrohr (13a) enthält, und
einen Seitenständer (21), konfiguriert, das Motorrad in einem Zustand aufzurichten, wenn das Motorrad in Richtung der Breite geneigt ist, wobei der Seitenständer (21) einen Ständerkörper (26) enthält, konfiguriert, auf eine Straßenoberfläche abzustützen, und einen Ständerhalter (27), der den Ständerkörper (26) lagert, um denselben zu ermöglichen, sich zwischen einer Service- Position (C) und einer Speicherposition (D) zu drehen, **dadurch gekennzeichnet, dass** der Ständerhalter (27) an dem Seitenwandabschnitt (8c') der Brennkraftmaschine (8) und zwischen dem Abgasrohr (13a) und dem Seitenwandabschnitt (8c') in Richtung der Breite des Motorrades montiert ist.

2. Motorrad nach Anspruch 1, **dadurch gekennzeichnet, dass** der Ständerhalter (27) enthält einen Montageflanschabschnitt (27a), montiert an dem Seitenwandabschnitt (8c') der Brennkraftmaschine (8), einen Lagerabschnitt (27b), der den Ständerkörper (26) lagert, wobei der Ständerkörper (26) durch eine Drehwelle (28), befestigt an dem Lagerabschnitt (27b), drehbar gelagert ist.

3. Motorrad nach Anspruch 2, **dadurch gekennzeichnet, dass** die Drehwelle (28) von dem Lagerabschnitt (27b) auf einer gegenüberliegenden Seite in Bezug auf das Abgasrohr (13a) vorspringt und / oder der Ständerkörper (26) angeordnet ist, gegen eine Lageroberfläche (27c) des Lagerabschnittes (27b), gebildet auf einer gegenüberliegenden Seite in Bezug auf das Abgasrohr (13a), anzuliegen.

4. Motorrad nach einem der Ansprüche 1 bis 3, **dadurch gekennzeichnet, dass** der Ständerkörper (26) eine Verbindung (26a), verbunden mit dem Ständerhalter (27), enthält und vorzugsweise die Drehwelle (28) einen Zapfenabschnitt (28a), der die Verbindung (26a) dreht, enthält.

5. Motorrad nach Anspruch 3 oder 4, **dadurch gekennzeichnet, dass** die Drehwelle (28) einen Lastaufnahmeabschnitt (28b) enthält, der gegen die Lageroberfläche (27c) anliegt.

6. Motorrad nach Anspruch 5, **dadurch gekennzeichnet, dass** der Lastaufnahmeabschnitt (28b) einen größeren Durchmesser als ein Durchmesser des Zapfenabschnittes (28a) hat.

7. Motorrad nach einem der Ansprüche 1 bis 6, **dadurch gekennzeichnet, dass** wenn der Ständerkörper (26) in seiner Lagerposition (D) ist, der Ständerkörper (26) und das Abgasrohr (13a) einander schneiden, wenn in der Draufsicht gesehen.

8. Motorrad nach einem der Ansprüche 1 bis 7, **dadurch gekennzeichnet, dass** das Abgasrohr (13a) seitlich des Seitenwandabschnittes (8c') der Brennkraftmaschine (8) angeordnet ist und sich in Bewegungsrichtung des Motorrades nach hinten erstreckt.

9. Motorrad nach einem der Ansprüche 1 bis 8, **dadurch gekennzeichnet, dass** die Abgasvorrichtung (13) außerdem enthält eine Verdrängungskammer (13c) mit einer Seitenwand (13d), mit der das Abgasrohr (13a) verbunden ist, und ein Schalldämpfer (13e), verbunden mit der Verdrängungskammer (13c), wobei eine Aussparung (A) an einer Verbindung der Verdrängungskammer (13c) mit dem Abgasrohr (13a) und dem Schalldämpfer (13e) gebildet ist, wobei sich die Aussparung (A) zwischenverjüngt nach innen in einer Richtung der Breite des Motorrades erstreckt.

10. Motorrad nach Anspruch 9, **dadurch gekennzeichnet, dass** wenn der Ständerkörper (26) in seiner Speicherposition (D) ist, ein Spitzenende (26f) des Ständerkörpers (26) die Aussparung (A) überlappt, wenn seitlich gesehen.

11. Motorrad nach Anspruch 9 oder 10, **dadurch gekennzeichnet, dass** wenn der Ständerkörper (26) in seiner Speicherposition (D) ist, ein Spitzenende (26f) des Ständerkörpers (26) in der Aussparung (A) positioniert ist, wenn seitlich gesehen.

## Revendications

1. Motocyclette comprenant :
un châssis (2),
un moteur (8) monté sur le châssis (2), ledit moteur (8) comportant une partie formant paroi latérale (8c'),
un dispositif d'échappement (13) relié au moteur (8), ledit dispositif d'échappement (13) comprenant un tuyau d'échappement (13a), et
une béquille latérale (21) conçue pour redresser la motocyclette dans un état dans lequel elle est inclinée dans la direction de la largeur de la motocyclette, ladite béquille latérale (21) comprenant un corps de béquille (26) conçu pour reposer sur une surface de route, et un support de béquille (27) supportant le corps de béquille (26) pour permettre à ce dernier de tourner entre une position de service (C) et une position de stockage (D), **caractérisée en ce que**
ledit support de béquille (27) est monté sur la partie formant paroi latérale (8c') du moteur (8) et entre le tuyau d'échappement (13a) et la partie formant paroi latérale (8c') dans la direction de la largeur de la motocyclette.

2. Motocyclette selon la revendication 1, **caractérisée en ce que** le support de béquille (27) comporte une partie formant bride de montage (27a) montée sur la partie formant paroi latérale (8c') du moteur (8), une partie formant support (27b) supportant le corps de béquille (26), le corps de béquille (26) étant supporté de façon à pouvoir tourner par un arbre rotatif (28) fixé à la partie formant support (27b).

3. Motocyclette selon la revendication 2, **caractérisée en ce que** l'arbre rotatif (28) fait saillie hors de la partie formant support (27b) sur un côté opposé par rapport au tuyau d'échappement (13a), et/ou le corps de béquille (26) est disposé de façon à venir en appui contre une surface de support (27c) de la partie formant support (27b) formée sur un côté opposé par rapport au tuyau d'échappement (13a).

4. Motocyclette selon l'une quelconque des revendications 1 à 3, **caractérisée en ce que** le corps de béquille (26) comporte un raccord (26a) relié au support de béquille (27) et, de préférence, l'arbre rotatif (28) comporte une partie formant tourillon (28a) qui fait tourner le raccord (26a).

5. Motocyclette selon la revendication 3 ou la revendication 4, **caractérisée en ce que** l'arbre rotatif (28) comporte une partie de réception de charge (28b) qui vient en appui contre la surface de support (27c).

6. Motocyclette selon la revendication 5, **caractérisée en ce que** la partie de réception de charge (28b) présente un diamètre plus grand qu'un diamètre de la partie formant tourillon (28a).

7. Motocyclette selon l'une quelconque des revendications 1 à 6, **caractérisée en ce que**, lorsque le corps de béquille (26) est dans sa position de stockage (D), le corps de béquille (26) et le tuyau d'échappement (13a) se coupent mutuellement tel que vu en plan.

8. Motocyclette selon l'une quelconque des revendications 1 à 7, **caractérisée en ce que** le tuyau d'échappement (13a) est disposé latéralement par rapport à la partie formant paroi latérale (8c') du moteur (8) et s'étend dans la direction de déplacement de la motocyclette vers l'arrière.

9. Motocyclette selon l'une quelconque des revendications 1 à 8, **caractérisée en ce que** le dispositif d'échappement (13) comporte en outre un chambre de déplacement (13c) avec une paroi latérale (13d), à laquelle est relié le tuyau d'échappement (13a), et un pot d'échappement (13e) relié à la chambre de déplacement (13c), une cavité (A) étant formée au niveau d'un raccord de la chambre de déplacement (13c) avec le tuyau d'échappement (13a) et le pot d'échappement (13e), ladite cavité (A) s'étendant de façon intermédiaire en présentant une dépression vers l'intérieur dans la direction de la largeur de la motocyclette.

10. Motocyclette selon la revendication 9, **caractérisée en ce que**, lorsque le corps de béquille (26) est dans sa position de stockage (D), une extrémité (26f) du corps de béquille (26) chevauche la cavité (A) tel que vu latéralement.

11. Motocyclette selon la revendication 9 ou la revendication 10, **caractérisée en ce que**, lorsque le corps de béquille (26) est dans sa
position de stockage (D), une extrémité (26f) du corps de béquille (26) est positionnée dans la cavité (A) tel que vu en plan.
